# EUROPÄISCHE PATENTSCHRIFT

(11) **EP 1 489 328 B1**
(45) Veröffentlichungstag und Bekanntmachung des Hinweises auf die Patenterteilung: **17.11.2010**
(21) Anmeldenummer: 04014164.0
(22) Anmeldetag: 17.06.2004
(51) Int. Cl.: F16D 25/10, F16D 21/06, F16D 25/0638

(54) **Lamellen-Kupplungseinrichtung**
Multi-disc clutch device.
Dispositif d'embrayage à disques multiples.

(30) Priorität: 18.06.2003 DE 20310015 U
(43) Veröffentlichungstag der Anmeldung: 22.12.2004
(73) Patentinhaber: ZF Sachs AG, 97424 Schweinfurt (DE)
(72) Erfinder: Rohm, Axel, 97453 Schonungen (DE); Tögel, Matthias, 97711 Massbach (DE); Kraus, Paul, 97464 Niederwerrn (DE); Kundermann, Wolfgang, 97422 Schweinfurt (DE); Grosspietsch, Wolfgang, 97422 Schweinfurt (DE); Stampf, Volker, 97422 Schweinfurt (DE); Prystupa, Peter, 97076 Würzburg (DE); Moseler, Olaf, 97070 Würzburg (DE); Schneider, Hans-Jürgen, 97749 Stettbach (DE)

(56) Entgegenhaltungen:
- DE-A- 10 004 189
- DE-A- 10 143 834
- DE-B- 1 600 183
- DE-U- 9 114 528

## Beschreibung

Die Erfindung bezieht sich auf eine nasslaufende Lamellen-Kupplungseinrichtung, welche mittels eines hydraulisch betätigbaren Kolbens ein Lamellenpaket betätigt, wobei zumindest der Kolben oder ein Lamellenträger Druckausgleichsöffnungen aufweist.
Es sind bereits Kupplungseinrichtungen bekannt (z.B. die gattungsbildende DE 100 04 189 A1), bei denen eine nasslaufende Doppelkupplung beschrieben wurde, welche über zwei radial angeordnete Lamellenkupplungsanordnungen verfügt, die jeweils mittels eines integrierten Druckmediumkraftzylinders betätigbar sind. Diese Zylinder weisen axial verschiebbare Betätigungskolben auf. Hierbei ist der Betätigungskolben der äußeren Kupplungsanordnung in seinem radial äußerem Bereich mit einer Kühlfluidabflussöffnung ausgestaltet. Der Außenlamellenträger der äußeren Kupplungsanordnung ist zusätzlich zu den Kühlfluidabflussöffnungen am Außenumfang im Bereich des Lamellenpaketes in seinem sich nach radial außen erstreckenden Bereich mit einer Kühlfluidabflussöffnung ausgestaltet. Diese Kühlfluidabflussöffnungen dienen dazu, negative Fliehkräfte von Kühlöl , welches sich im Bereich des Lamellenpaketes angesammelt hat, auf den Betätigungskolben der äußeren Kupplungsanordnung zu verhindern. Angestautes Kühlöl kann somit unter Umgehung der am Außenumfung angeordneten Kühlfluidabflussöffnung aus der rotierende Kupplungseinrichtung abfließen und führt nicht zu einem Überdruck, bzw. einer daraus resultierenden positiven Kraft auf den Betätigungskolben der äußeren Kupplungsanordnung, bzw. auf das Lamellenpaket direkt. Nachteilig bei dieser Konstruktion der Lamellen-Kupplungseinrichtung ist, dass weiterhin negative Fliehkrafteinflüsse des Kühlöls einen Unterdruck zwischen Betätigungskolben und Lamellenträger, speziell zwischen dem Betätigungskolben der äußeren Kupplungsanordnung und dem Außenlamellenträger der äußeren Kupplungsanordnung, bzw. zwischen dem Innenlamellenträger der äußeren Kupplungsanordnung und dem Trägerblech hervorrufen können, welcher durch die Anordnung der Kühlfluidabflussöffnung nicht vermieden werden kann. Bei nicht rotierender Kupplungseinrichtung, bzw. bei Überschreitung eines bestimmten Volumenstromes der Kühlölversorgung kann es zu einer nahezu vollständigen Befüllung der Kupplungseinrichtung kommen, was zu einer Befüllung aller dem Kühlöl zugänglichen Hohlräume der Kupplungseinrichtung führt. Somit sind auch die relativ axial schmal ausgebildeten Zwischenräume zwischen dem Innenlamellenträger der inneren Kupplungsanordnung und dem Innenlamellenträger der äußeren Kupplungsanordnung, sowie zwischem dem Trägerblech und dem Innenlamellenträger der äußeren Kupplungsanordnung befüllt. Bei anschließender Rotation einer so vollbefüllten Kupplungseinrichtung werden diese Kühlölvolumina durch Fliehkraftwirkung nach radial außen gezogen, was zu einen der Fliehkraft entgegenwirkenden Unterdruck im radial inneren Bereich dieser Kühlölsäule führt. Dieser Unterdruck wirkt , in Fliessrichtung gesehen, auf das gesamte Kühlölsystem zurück, also auch auf die Kühlölversorgungskanäle der Ölzuführnabe und damit auch auf die beiden Fliehkraftdruckausgleichsräume der beiden Betätigungskolben.
Hierdurch wird die Kompensationskraft auf die rückseitige Wirkfläche der Betätigungskolben vermindert, was zu einer Unterkompensation der Fliehkräfte der Ölvolumina in den Druckmediumkraftzylindern führt. Damit ist das drehzahlunabhängige Fliehkraftdruckgleichgewicht zwischen den Druckmediumkraftzylindern und den Fliehkraftdruckausgleichsräumen verschoben und der nicht ausgeglichene Fliehkraftdruckanteil in den Druckmediumkraftzylindern führt zu einer erhöhten Betätigungskraft der Betätigungskolben auf die Lamellenpakete der Kupplungsanordnungen und damit zu einer erhöhten Drehmomentüberragungsfähigkeit. Eine Regeleinrichtung der hydraulischen Druckversorgungseinrichtung kann dies wieder einregeln, indem der Betätigungsdruck in den Druckmediumkraftzylindern abgesenkt wird, ein Abreißen der Ölsäule und damit der Vollfüllung in der Lamellen-Kupplungseinrichtung beendet jedoch schlagartig den aufgebauten Unterdruckeffekt in den Fliehkraftdruckausgleichsräumen, das Gleichgewicht zwischen dem Fliehkraftdruck in den Fliehkraftdruckausgleichsräumen und den Druckmediumkraftzylindern ist wieder hergestellt, wodurch die Kraft der Betätigungskolben der Kupplungsanordnungen ansteigt. Ein erneutes Nachregeln des Betätigungsdruckes ist erforderlich. Weiterhin tritt bei Vollfüllung der Lamellen-Kupplungseinrichtung mit Kühlöl und anschließendes Entleeren derselben durch einen Anstieg der Rotation ein ungewollter Unterdruck zwischen Betätigungskolben der äußeren Kupplungsanordnung und Außenlamellenträger der äußeren Kupplungsanordnung auf. Dieser Unterdruck resultiert ebenso wie die oben geschilderten Druckeffekte aus der auf die Ölsäule wirkende Fliehkraft, welche das Ölvolumen zwischen dem Betätigungskolben der äußeren Kupplungsanordnung und dem Außenlamellenträger der äußeren Kupplungsanordnung nach radial außen zieht. Dieser Unterdruckeffekt wird durch die Ausgestaltung der beiden Bauteile begünstigt. Der Betätigungskolben der äußeren Kupplungsanordnung und der Außenlamellenträger der äußeren Kupplungsanordnung erstrecken sich in ihrem radialen Bereich im Wesentlichen parallel nach radial außen und schließen zwischen sich einen bezüglich der radialen Ausdehnung schmalen Ringspalt zwischen sich ein. Insgesamt kann festgestellt werden, dass alle Bauteile der Lamellen-Kupplungseinrichtung, welche axial zwischen sich einen relativ schmalen Ringspalt einschließen, welcher unter bestimmten Betriebsbedingungen zumindest teilweise vollgefüllt ist und bei Rotation der Lamellen-Kupplungseinrichtung und dadurch resultierendem Leerschleudern derselben, geleert wird, einen Unterdruck durch abfließendes Kühlöl begünstigen können.

Hiervon ausgehend ist es Aufgabe der Erfindung, eine Lamellen-Kupplungseinrichtung derart weiterzubilden, dass Unterdruckeffekte aufgrund eines Leerschleuderns der Kupplungseinrichtung aufgrund vorhergehender Vollfüllung mit Kühlöl vermieden werden, und damit die Regelbarkeit der Drehmomentübertragungsfähigkeit der Kupplungseinrichtung zu verbessern.

Zur Lösung dieser Aufgabe ist erfindungsgemäß vorgesehen, dass zumindest der Kolben oder/und ein Lamellenträger oder/und ein weiteres sich im Wesenlichen radial erstreckendes Bauteil oder Bauteilabschnitte der Lamellen-Kupplungseinrichtung Druckausgleichsöffnungen aufweist, wobei mindestens eine als Belüftungsöffnung ausgeführt ist.
Vorteilhaft hierbei ist, dass bei Rotation der Lamellen-Kupplungseinrichtung das Öl des vollgefüllten Ringspaltes nach radial außen hin wegfließen kann und durch die Belüftungsöffnung das nach radial außen verschobenen Ölvolumen aus dem Bereich der Belüftungsöffnung durch einfließendes Medium aus dem, mit dem Ringspalt durch die Belüftungsöffnung verbundenen, benachbarten Hohlraum ersetzt wird. Erfindungsgemäß handelt es sich hierbei um ein zumindest teilweise gasförmiges Medium wie Luft oder einen sogenannten Ölnebel, welcher ein Öl-Luft Gemisch ist. Durch diesen Ausgleich des abgeflossenen Ölvolumens wird ein sich dadurch einstellender Unterdruck in diesem Ringspalt erfindungsgemäß verhindert. Vorzugsweise ist die mindestens eine Belüftungsöffnung hierbei in einem radial inneren Bereich des die Belüftungsöffnung aufweisenden Bauteils angeordnet. Vorteilhaft hierbei ist, dass die Sogwirkung auf das Ölvolumen welches sich radial von der Drehachse der Lamellen-Kupplungseinrichtung bis hin zum Radius, auf welchem die mindestens eine Belüftungsöffnung angeordnet ist, minimiert wird. Die Sogwirkung der Ölsäule ist vom Radius, auf welchem die mindestens eine Belüftungsöffnung angeordnet ist, nach radial außen hin unterbrochen. Vorzugsweise ist die mindestens eine Belüftungsöffnung in einem Kolben radial auserhalb des dem Kolben zugeordneten Druckmediumkraftzylinders angeordnet. Höchstvorzugsweise ist zusätzlich zu der mindestens einen Belüftungsöffnung des Kolbens in einem radialen Außenbereich des Kolbens mindestens eine weitere Druckausgleichsöffnung angeordnet.

Nach einem Merkmal der Erfindung befindet sich die mindestens eine Belüftungsöffnung in einem radial inneren Bereich eines primärseitig angeordneten Trägerblechs der Lamellen-Kupplungseinrichtung. Vorteilhaft hierbei ist, dass sich kein Unterdruck in dem vom Trägerblech und dem Innenlamellenträger der äußeren Kupplungsanordnung gebildeten Ringspalt ausbilden kann. Weiterhin wird durch die Anordnung der Belüftungsöffnung im Trägerblech ein radialer Innenbereich der Lamellen-Kupplungseinrichtung mit einem Außenbereich der Lamellen-Kupplungseinrichtung wirkverbunden, wodurch ein Druckausgleich zwischen einem Innenbereich und einem Außenbereich der Lamellen-Kupplungseinrichtung erfolgen kann.
Nach einem weiteren Merkmal der Erfindung weist ein dem Trägerblech benachbart angeordneter Lamellenträger mindestens eine Belüftungsöffnung in einem radial inneren Bereich auf. Vorzugsweise ist der Lamellenträger sekundärseitig angeordnet, wodurch er bei laufendem Motor aber geöffneter Lamellen-Kupplungseinrichtung nicht rotiert. Vorteilhaft hierbei ist, dass eine Vollfüllung des dem Lamellenträger benachbart angeordneten Hohlraumes, welche sich bevorzugt bei geöffneter Kupplungseinrichtung und damit nicht rotierendem Hohlraum einstellt, beim Schließen der Kupplungseinrichtung entleert, wobei durch die Belüftungsöffnung eine ein Leerschleudern des Hohlraums unterstützende Wirkung auftritt.

Eine erfindungsgemäße Ausgestaltung der Lamellen-Kupplungseinrichtung sieht vor, dass dass das Trägerblechs und der Lamellenträger Belüftungsöffnungen aufweisen, wobei die Belüftungsöffnungen auf einem im Wesentlichen gleich großen radialen Abstand zur Drehachse der Lamellen-Kupplungseinrichtung angeordnet sind. Vorteilhaft hierbei ist, dass ein Druckausgleich eines nicht unmittelbar dem Außenraum der Lamellen-Kupplungseinrichtung benachbarten Hohlraumes oder Ringspalts der Lamellen-Kupplungseinrichtung mittelbar über den zwischen dem Außenraum und dem Hohlraum liegenden weiteren Hohlraum mit dem Außenbereich der Lamellen-Kupplungseinrichtung erfolgen kann.

Nach einem bevorzugtem Aspekt der Erfindung stellen die Belüftungsöffnungen bei Rotation der Lamellen-Kupplungseinrichtung einen Druckausgleich zwischen einen im Innern der Lamellen-Kupplungseinrichtung befindlichen Hohlraum und einem nichtrotierenden Nassraum auserhalb der Lamellenkupplungseinrichtung durch einen Zustrom des im nichtrotierenden Nassraum befindlichen und im Wesentlichen gasförmigen Mediums ins Innere der Lamellen-Kupplungseinrichtung, her. Vorteilhaft hierbei ist, dass bei Vollfüllung der Lamellen-Kupplungseinrichtung die nach radial außen hin verschobenen Ölvolumina im Wesentlichen keine Sogwirkung mehr auf das radial innerhalb der Belüftungsöffnung befindliche Ölvolumen im betreffenden Ringspalt haben, da die Belüftungsöffnungen die Sogwirkung auf das sich im nichtrotierenden Nassraum befindliche Medium, vorzugsweise ein sogenannter Ölnebel, umlenken wodurch dieses Medium ins Kupplungsinnere gezogen wird.

Ein erfindungsgemäßes Ausführungsbeispiel ist in der Figur dargestellt.

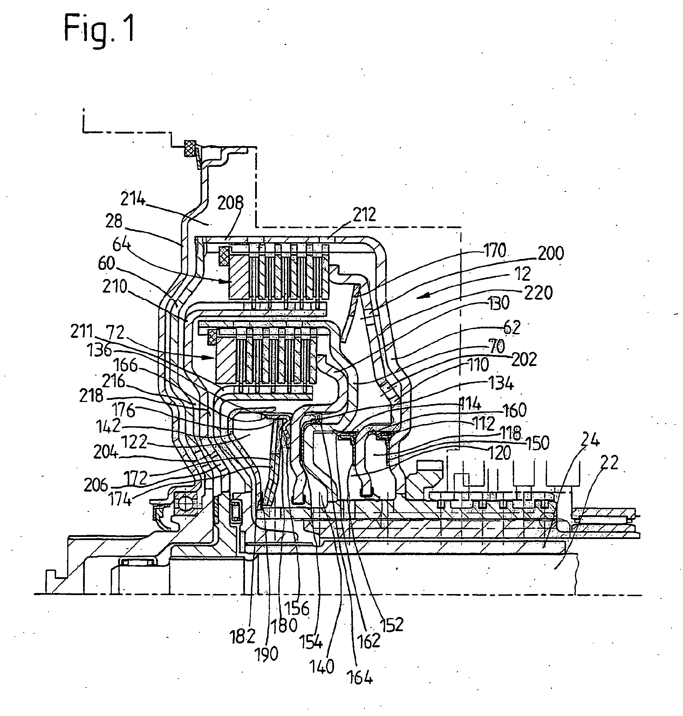

Es zeigt Fig. 1 eine erfindungsgemäße Doppel-Kupplungseinrichtung mit einer bevorzugten Ausgestaltung der Druckausgleichsöffnung.

In Fig. 1 ist eine Kupplungseinrichtung 12 dargestellt, welche als Doppelkupplung mit zwei radial angeordneten Kupplungsanordnungen 64, 72 ausgebildet ist. Die beiden Kupplungsanordnungen werden mittels den Betätigungskolben 110, 130 hydraulisch betätigt, wobei über eine nicht dargestellte Hydraulikeinheit Druckmedium, vorzugsweise Hydrauliköl, in die beiden Druckmediumkraftzylinder 118, 140 gefördert wird. Die Druckmediumkraftzylinder 118, 140 sind radial außen über die Dichtungsanordnungen 112, 134 abgedichtet und radial innen über Dichtungen, welche am Innenumfang der beiden Betätigungskolben 110, 130 anvulkanisiert sind. Die beiden Dichtungsanordnungen 112, 134 bestehen jeweils aus einem Dichtungselementhalter 150, 154 und einem daran anvulkanisiertem Dichtungselement 160, 164. Die Dichtungselementhalter 150, 154 sind jeweils an den Zylinderwandungen 62, 70 angeschweißt. Die Dichtungsanordnung 134 der inneren Kupplung ist auf einem größerem Radius als die Dichtungsanordnung 112 angebracht, sodass trotz kleinerem Durchmesser der inneren Kupplung aufgrund der größeren Kolbenfläche bei gleichem Betätigungsdruck ein im Wesentlichen gleiches Drehmoment übertragen werden kann. Den beiden Druckmediumkraftzylinder 118, 140 sind jeweils ein Fliehkraftdruckausgleichsraum 120, 122 zugeordnet, wobei der Fliehkraftdruckausgleichsraum 122 der äußeren Kupplungsanordnung 64 aus dem Kolben 110 der Kupplungsanordnung 64 und der Zylinderwandung 70 der inneren Kupplungsanordnung 72 gebildet wird und mittels der Dichtungsanordnung 114 abgedichtet wird. Die Dichtungsanordnung 114 besteht wiederum aus einem Dichtungselementhalter 152 und einem Dichtungselement 162, wobei der Dichtungselementhalter 152 am Betätigungskolben 110 angeschweißt ist. Das Dichtungselement 162 ist an einem axialen Abschnitt des Dichtungselementhalters 152 aufvulkanisiert und durch diesen in radialer Richtung versteift, sodass bei hohen Drehzahlen und dem daraus resultierendem Fliehkraftdruck das Dichtungselement 162 nicht nach radial außen umklappen kann. Ein weiterer Vorteil dieser Ausgestaltung der Dichtungsanordnung 114 besteht darin, dass relativ große Verfahrwege des Betätigungskolbens 110 realisiert werden können. Der Verfahrweg des Kolbens ist proportional zur Anzahl der Lamellen eines Lamellenpaketes und deswegen musste bisher die Kolbengeometrie dem anzustrebenden Verfahrweg angepasst werden. Die erfindungsgemäße Ausgestaltung der Dichtungsanordnung erlaubt es nunmehr durch gezielte Ausgestaltung den Verfahrweg des Kolbens zu optimieren, sodass baugleiche Kolben in verschiedenen Kupplungen mit verschiedener Anzahl von Lamellen eingesetzt werden können. Der Fliehkraftdruckausgleichsraum 122 der inneren Kupplungsanordnung 72 wird aus dem Betätigungskolben 130 und der Begrenzungswandung 142 gebildet, wobei die Dichtungsanordnung 136 den Fliehkraftdruckausgleichsraum 122 nach radial außen hin abdichtet. Die Dichtungsanordnung 136 wird vom Dichtungselement 166 und dem Dichtungselementhalter 156, gebildet, wobei der Dichtungselementhalter 156 am Betätigungskolben 130 angeschweißt ist. Der Kolben 130 wird durch das Rückstellelement 172 welches als Tellerfederanordnung 174 mit zwei gleichsinnig geschichteten Tellerfedern ausgebildet ist, zurück in seine Ausgangslage gedrückt. Die beiden Tellerfedern drücken hierzu radial außen axial gegen den Dichtungselementhalter 156. Der Anlagebereich 180 des Dichtungselementhalter 156 ist hierzu wulstartig ausgebildet, sodass der Anlagebereich 180 axial etwas distanziert vom Betätigungskolben 130 ausgebildet ist, sodass bei Verfahren des Kolbens der Anlagebereich 180 im Wesentlichen konstant bleibt und ein Einfedern der beiden Tellerfedern in eine sogenannte Über-Totpunktlage ermöglicht werden kann. Vorzugsweise ist der Anlagebereich 180 hart ausgebildet um einen Verschleiß entgegenzuwirken. Hierzu kann entweder der komplette Dichtungselementhalter 156 aus verschleißfestem Stahl ausgebildet sein oder nur der Anlagebereich 180 gehärtet sein. Ein separates Härten des Betätigungskolbens 130 im Anlagebereich des Rückstellelementes ist somit nicht mehr erforderlich. Radial innen stützt sich die Tellerfederanordnung 174 mittels der Anlagescheibe 190, welche als Verschleißschutz dient, an der Begrenzungswandung 142 ab. Alternativ kann anstelle der Anlagescheibe die Begrenzungswandung in diesem Bereich verschleißfest, zum Beispiel durch Härten, ausgestaltet werden. Weiterhin dient die Dichtungsanordnung 136 als Zentrierung der Tellerfederanordnung 174. Hierzu greift ein axialer Abschnitt 176 des Dichtungselementhalters 156, radial über den Außenumfang der beiden Tellerfedern, wodurch diese in ihrer radialen Position gehalten werden. Der Dichtungselementhalter 156 ist dazu nur an seiner radialen Außenseite mit dem Dichtungselement 166 versehen. Weiterhin ermöglicht die Anordnung der Dichtungsanordnung 136 am Betätigungskolben 130 eine Anordnung des Fliehkraftdruckausgleichraumes 122 der inneren Kupplungsanordnung 72 auf gleichem radialem Durchmesser wie der Druckmediumkraftzylinder 140, wodurch keine die Ölsäule begrenzende Bohrung in der Begrenzungswandung 142 mehr benötigt wird, welche bei Vollfüllung der Kupplungseinrichtung 12 mit Kühlöl eine Überkompensation der Fliehkraft zur Folge hat. Das Trägerblech 60, welches an seinem Innenumfang mit der Kupplungseingangsnabe verschweißt und an seinem Außenumfang mit dem Außenlamellenträger 208 der äußeren Kupplungsanordnung verschweißt ist, weißt an seinem radial inneren Bereich eine Belüftungsöffnung 204 auf, welche einen Druckausgleich zwischen dem Inneren der Lamellen-Kupplungseinrichtung 12 und dem nichtrotierenden Nassraum 214, welcher die Lamellen-Kupplungseinrichtung aufnimmt, bewirkt. Der Nassraum wird gegenüber dem die Antriebseinheit, bzw,. einem der Antriebseinheit nachgeschalteten Torsionsschwingungsdämpfer aufnehmenden Trockenraum durch die Verschlusswandung 28 abgegerenzt. Bei geöffneten Betätigungskolben 110, 130 rotiert das primärseitig, also motorseitig, angeordnete Trägerblech 60, der Außenlamellenträger der äußeren Kupplungsanordnung 208 und der Außenlamellenträger der inneren Kupplungsanordnung, welcher in seinem radial inneren Bereich als Zylinderwandung 70 ausgebildet ist, mit Drehzahl der Antriebseinheit. Der Innenlamellenträger der äußeren Kupplungsanordnung 210 sowie der Innenlamellenträger der inneren Kupplungsanordnung 211 rotieren bei stehendem Fahrzeug hingegen nicht, sodass sich bei hohem Kühlölvolumenstrom der Kühlölversorgungs-Einrichtung im Ringspalt 216 zwischen dem Trägerblech 60 und dem Innenlamellenträger der äußeren Kupplungsanordnung 210 und im Ringspalt 218 zwischen dem Innenlamellenträger der äußeren Kupplungsanordnung 210 und dem Innenlamellenträger der inneren Kupplungsanordnung aufgrund fehlender oder reduzierter Fliehkräfte eine Vollfüllung mit Kühlöl ergeben kann. Beim Schließen der Betätigungskolben der Kupplungsanordnungen und/oder Erhöhung der Rotationsdrehzahl aufgrund zum Beispiel eines Anfahrvorganges werden die in den Ringspalten 216 und 218 befindlichen Ölvolumina aufgrund der Fliehkraft nach radial außen geschleudert und können hierbei ein entsprechendes gasförmiges Ausgleichsvolumen durch die Belüftungsöffnungen 204, 206 aus dem nichtrotierenden Außenraum 214 ins Innere der Lamellen-Kupplungseinrichtung ziehen, wodurch ein Unterdruck auf das radial innerhalb der Belüftungsöffnungen gelegene Ölvolumen unterbunden wird. Das gasförmige Ausgleichsvolumen des Nassraumes ist hierbei als ein Ölnebel anzusehen, der dadurch entsteht, das Kühlöl, welches durch das Lamellenpaket der äußeren Kupplungsanordnung strömt, durch Öffnungen des Außenlamellenträgers der äußeren Kupplungsanordnung 208 im Bereich des Lamellenpaketes der äußeren Kupplungsanordnung nach radial außen geschleudert wird um anschließend in den Ölsumpf zurückzufließen, aus welchem die Kühlölversorgungs-Einrichtung das zu fördernde Kühlöl entnimmt. Der Betätigungskolben 110 der äußeren Kupplungsanordnung 64 ist mit Druckausgleichsöffnungen versehen, wobei Druckausgleichsöffnungen 200 in einem radial äußeren Bereich und Druckausgleichsöffnungen 202 in einem radial inneren Bereich angeordnet sind. Die Druckausgleichsöffnungen 202 sind hierbei als Belüftungsöffnungen ausgebildet, welche in einem radial inneren Bereich des Kolbens den Ringspalt 220, welcher vom Betätigungskolben 110 und dem Außenlamellenträger 208 der äußeren Kupplungsanordnung gebildet wird, mit dem Hohlraum zwischen dem Außenlamellenträger 70 der inneren Kupplungsanordnung und dem Betätigungskolben 110 verbindet. Durch diese Anordnung der Belüftungsöffnung 202 kann sich beim Leerschleudern der Lamellen-Kupplungseinrichtung kein Unterdruck durch abfließendes Kühlöl im Ringspalt 220 aufbauen und dadurch eine Kraft auf den Betätigungskolben 110 in Richtung Öffnen der äußeren Kupplungsanordnung bewirken. Die Druckausgleichsöffnung 200 im radial äußeren Bereich des Betätigungskolbens 110 dient dazu, im Zwischenraum zwischen Lamellenpaket und dem Betätigungskolben 110 der äußeren Kupplungsanordnung aufgestautes Kühlöl auf die Rückseite des Betätigungskolbens 110 zu leiten um ebenfalls eine Kraftwirkung des Kühlöls auf den Betätigungskolben 110 in Richtung Öffnen der äußeren Kupplungsanordnung zu verhindern. Hierbei dient die Druckausgleichsöffnung 200 im Gegensatz zur Belüftungsöffnung 202 dazu, das Kühlöl direkt axial abzuführen wohingegen die Belüftungsöffnung 202 dazu dient, einen entstehenden Unterdruck durch radial abfließendes Kühlöl mittels zuströmenden Ausgleichsmediums zu unterbinden. Weiterhin sind im radial äußeren, axial verlaufenden Abschnitt des Außenlamellenträgers der äußeren Kupplungsanordnung 208 Druckausgleichsöffnungen 212 vorgesehen, welche zusätzlich zu den Öffnungen des Außenlamellenträgers der äußeren Kupplungsanordnung 208 im Bereich des Lamellenpakets axial daneben in einem Bereich neben dem Lamellenpaket oder zumindest mit dessen Anfangs-, bzw. Endlamelle axial überdeckend angeordnet sind um aufgestautes Kühlöl schneller direkt radial aus der Lamellen-Kupplungseinrichtung zu bringen, ohne dass das Lamellenpaket der äußeren Kupplungsanordnung radial oder axial durchströmt werden muss.

Betreffend weitere Einzelheiten und vorteilhafte Ausgestaltungen der Doppelkupplung 12 wird auf die deutschen Patentanmeldungen 101 11 202A1 A1 und 101 24 213 verwiesen.

### Bezugszeichenliste

- 12.: Kupplungseinrichtung
- 22.: innere Getriebeeingangswelle
- 24.: äußere Getriebeeingangswelle
- 28.: Verschlusswandung
- 60.: Trägerblech
- 62.: Zylinderwandung K1
- 64.: äußere Kupplungsanordnung
- 70.: Zylinderwandung K2
- 72.: innere Kupplungsanordnung
- 110.: Betätigungskolben K1
- 112.: Dichtungsanordnung DK1
- 114.: Dichtungsanordnung AK1
- 118.: Druckmediumkraftzylinder DK1
- 120.: Fliehkraftdruckausgleichsraum K1
- 122.: Fliehkraftdruckausgleichsraum K2
- 130.: Betätigungskolben K2
- 134.: Dichtungsanordnung DK2
- 136.: Dichtungsanordnung AK2
- 140.: Druckmediumkraftzylinder DK2
- 142.: Begrenzungswandung
- 150.: Dichtungselementhalter
- 152.: Dichtungselementhalter
- 154.: Dichtungselementhalter
- 156.: Dichtungselementhalter
- 160.: Dichtungselement
- 162.: Dichtungselement
- 164.: Dichtungselement
- 166.: Dichtungselement
- 170.: Rückstellelement K1
- 172.: Rückstellelement K2
- 174.: Tellerfederanordnung
- 176.: axialer Abschnitt
- 180: Anlagebereich
- 182.: innerer Anlagebereich
- 190.: Anlagescheibe
- 200.: Druckausgleichsöffnung
- 202.: Belüftungsöffnung
- 204.: Belüftungsöffnung
- 206.: Belüftungsöffnung
- 208.: Außenlamellenträger
- 210.: Innenlamellenträger
- 212.: Druckausgleichsöffnung
- 214.: Nassraum
- 216.: Ringspalt
- 218.: Ringspalt
- 220.: Ringspalt

## Patentansprüche

1. Lamellen-Kupplungseinrichtung (12) zur Drehmomentübertragung in einem Antriebsstrang eines Kraftfahrzeugs zwischen einer Antriebseinheit und einem Getriebe, wobei die Kupplungseinrichtung mindestens ein, mittels einem hydraulisch betätigbaren Kolben (110, 130), betätigbares Lamellenpaket aufweist, welches mit einem Innenlamellenträger (210, 211) drehfest angeordnete Innenlamellen und mit einem Außenlamellenträger (208) drehfest angeordnete Außenlamellen aufweist, wobei zur Kühlung des Lamellenpakets die Lamellen-Kupplungseinrichtung (12) im Wesentlichen von radial innen nach radial außen mit von einer Kühlölversorgungs-Einrichtung bereitgestellten Kühlöl durchströmt wird, wobei dem mindestens einem Betätigungskolben (110, 130 ) ein an die Kühlölversorgungs-Einrichtung angeschlossener Fliehkraftdruckausgleichsraum (120, 122) zugeordnet ist und wobei zumindest der Kolben (110 ) oder/und ein Lamellenträger (208,210) oder/und ein weiteres sich im Wesenlichen radial erstreckendes Bauteil oder Bauteilabschnitte Druckausgleichsöffnungen ( 200, 202, 204, 206, 212) aufweist,
**dadurch gekennzeichnet,**
**dass** mindestens eine der Druckausgleichsöffnungen als Belüftungsöffnung (202, 204, 206) ausgeführt ist.

2. Lamellen-Kupplungseinrichtung nach Anspruch 1,
**dadurch gekennzeichnet,**
**dass** die mindestens eine Belüftungsöffnung (204) in einem radial inneren Bereich eines primärseitig angeordneten Trägerblechs (60) der Lamellen-Kupplungseinrichtung (12) angeordnet ist.

3. Lamellen-Kupplungseinrichtung nach Anspruch 1,
**dadurch gekennzeichnet,**
**dass** ein dem Trägerblech (60) benachbart angeordneter Lamellenträger (210) mindestens eine Belüftungsöffnung (206) in einem radial inneren Bereich aufweist.

4. Lamellen-Kupplungseinrichtung nach Anspruch 1 bis 3,
**dadurch gekennzeichnet,**
**dass** das Trägerblech (60) und der Lamellenträger (210) Belüftungsöffnungen (204, 206 ) aufweisen, wobei die Belüftungsöffnungen (204, 206) auf einem im Wesentlichen gleich großen radialen Abstand zur Drehachse der Lamellen-Kupplungseinrichtung (12) angeordnet sind.

5. Lamellen-Kupplungseinrichtung nach Anspruch 2,
**dadurch gekennzeichnet,**
**dass** die Belüftungsöffnungen (204, 206) bei Rotation der Lamellen-Kupplungseinrichtung (12) einen Druckausgleich zwischen einem im Innern der Lamellen-Kupplungseinrichtung befindlichem Hohlraum (216, 218, 220) und einem nichtrotierenden Nassraum (218) auserhalb der Lamellenkupplungseinrichtung (12) durch einen Zustrom des im nichtrotierenden Nassraum (218) befindlichen und im Wesentlichen gasförmigen Mediums ins Innere der Lamellen-Kupplungseinrichtung (12), bewirken.

## Claims

1. Multi-disc clutch device (12) for transmitting torque in a drivetrain of a motor vehicle between a drive unit and a gearbox, with the clutch device having at least one disc pack which can be actuated by means of a hydraulically actuable piston (110, 130) and which has inner discs arranged for conjoint rotation with an inner disc carrier (210, 211) and has outer discs arranged for conjoint rotation with an outer disc carrier (208), with cooling oil provided by a cooling oil supply device flowing through the multi-disc clutch device (12) substantially from radially inside to radially outside in order to cool the disc pack, with the at least one actuating piston (110, 130) being assigned a centrifugal force pressure compensating chamber (120, 122) which is connected to the cooling oil supply device, and with at least the piston (110) and/or a disc carrier (208, 210) and/or a further substantially radially extending component or component sections having pressure compensating openings (200, 202, 204, 206, 212),
**characterized**
**in that** at least one of the pressure compensating openings is designed as a ventilation opening (202, 204, 206).

2. Multi-disc clutch device according to Claim 1,
**characterized**
**in that** the at least one ventilation opening (204) is arranged in a radially inner region of a carrier plate (60), which is arranged at the primary side, of the multi-disc clutch device (12).

3. Multi-disc clutch device according to Claim 1,
**characterized**
**in that** a disc carrier (210) which is arranged adjacent to the carrier plate (60) has at least one ventilation opening (206) in a radially inner region.

4. Multi-disc clutch device according to Claims 1 to 3,
**characterized**
**in that** the carrier plate (60) and the disc carrier (210) have ventilation openings (204, 206), with the ventilation openings (204, 206) being arranged at substantially the same radial distance from the axis of rotation of the multi-disc clutch device (12).

5. Multi-disc clutch device according to Claim 2,
**characterized**
**in that**, during rotation of the multi-disc clutch device (12), the ventilation openings (204, 206) generate pressure compensation between a cavity (216, 218, 220) situated in the interior of the multi-disc clutch device and a non-rotating wet chamber (218) outside the multi-disc clutch device (12) by means of a flow of the substantially gaseous medium situated in the non-rotating wet chamber (218) into the interior of the multi-disc clutch device (12).

## Revendications

1. Dispositif d'embrayage à disques (12) pour le transfert de couple dans une chaîne cinématique d'un véhicule automobile entre une unité d'entraînement et une boîte de vitesses, le dispositif d'embrayage présentant au moins un paquet de disques pouvant être actionné au moyen d'un piston (110, 130) à commande hydraulique, qui présente des disques internes disposés de manière solidaire en rotation avec un support de disques internes (210, 211) et des disque externes disposés de manière solidaire en rotation avec un support de disques externes (208), le dispositif d'embrayage à disques (12) étant parcouru essentiellement radialement depuis l'intérieur vers l'extérieur par de l'huile de refroidissement fournie par un dispositif d'alimentation en huile de refroidissement pour refroidir le paquet de disques, l'au moins un piston d'actionnement (110, 130) étant associé à un espace de compensation de la pression de la force centrifuge (120, 122) raccordé au dispositif d'alimentation en huile de refroidissement, et au moins le piston (110) et/ou un support de disques (208, 210) et/ou un autre composant s'étendant essentiellement radialement ou des portions de composant présentant des ouvertures de compensation de la pression (200, 202, 204, 206, 212),
**caractérisé en ce**
**qu'**au moins l'une des ouvertures de compensation de la pression est réalisée sous forme d'ouverture de ventilation (202, 204, 206).

2. Dispositif d'embrayage à disques selon la revendication 1,
**caractérisé en ce que**
l'au moins une ouverture de ventilation (204) est disposée dans une région radialement interne d'une tôle de support (60) disposée du côté primaire du dispositif d'embrayage à disques (12).

3. Dispositif d'embrayage à disques selon la revendication 1,
**caractérisé en ce**
**qu'**un support de disques (210) disposé à côté de la tôle de support (60) présente au moins une ouverture de ventilation (206) dans une région radialement interne.

4. Dispositif d'embrayage à disques selon les revendications 1 à 3,
**caractérisé en ce que**
la tôle de support (60) et le support de disques (210) présentent des ouvertures de ventilation (204, 206), les ouvertures de ventilation (204, 206) étant disposées essentiellement à une même distance radiale à l'axe de rotation du dispositif d'embrayage à disques (12).

5. Dispositif d'embrayage à disques selon la revendication 2,
**caractérisé en ce que**
les ouvertures de ventilation (204, 206), lors de la rotation du dispositif d'embrayage à disques (12), provoquent un équilibrage de la pression entre une cavité (216, 218, 220) se trouvant à l'intérieur du dispositif d'embrayage à disques et un espace humide non rotatif (218) à l'extérieur du dispositif d'embrayage à disques (12) par un afflux du fluide se trouvant dans l'espace humide non rotatif (218) et essentiellement gazeux à l'intérieur du dispositif d'embrayage à disques (12).
